# EUROPÄISCHE PATENTANMELDUNG

(11) **EP 1 589 210 A2**
(43) Veröffentlichungstag der Anmeldung: **26.10.2005**
(21) Anmeldenummer: 05102288.7
(22) Anmeldetag: 22.03.2005
(51) Int. Cl.: F02D 41/20, F02D 41/40

(54) **Verfahren zum Betrieb einer Kraftstoffeinspritzanlage für einen Verbrennungsmotor**

(30) Priorität: 23.04.2004 DE 102004020416
(71) Anmelder: ROBERT BOSCH GMBH, 70442 Stuttgart (DE)
(72) Erfinder: Huber, Andreas, 71711, Steinheim (DE); Schempp, Stefan, 73249, Wernau (DE)

(57) **Zusammenfassung**

Ein Verfahren zum Betrieb einer Kraftstoffeinspritzanlage für einen wenigstens einen Zylinder aufweisenden Verbrennungsmotor, wobei jedem Zylinder wenigstens ein Aktor zur Einspritzung von Kraftstoff in den Zylinder durch Laden oder Entladen des Aktors zugeordnet ist, und wobei die Einspritzung von Kraftstoff in wenigstens zwei zeitlich aufeinanderfolgenden, programmierten Einspritzphasen erfolgt, ist dadurch gekennzeichnet, daß der Zeitpunkt wenigstens einer von dem wenigstens einen Aktor bewirkten Voreinspritzung drehzahlabhängig im wesentlichen zeitgleich mit einer von dem wenigstens einen Aktor bewirkten Haupteinspritzung programmiert wird.

## Beschreibung

### Stand der Technik

Die Erfindung betrifft ein Verfahren zum Betrieb einer Kraftstoffeinspritzanlage für einen wenigstens einen Zylinder aufweisenden Verbrennungsmotor gemäß dem Oberbegriff des Anspruchs 1.

Bei modernen Common-Rail-Einspritzanlagen erfolgt die Einspritzung von Kraftstoff mittels Piezo- oder Magnetventilaktoren. Eine Einspritzanlage, bei der jedem Zylinder wenigstens ein Piezoaktor zur Einspritzung von Kraftstoff in den Zylinder durch Laden oder Entladen des Aktors zugeordnet ist, geht beispielsweise aus der US 2002/0046731 A1 hervor.

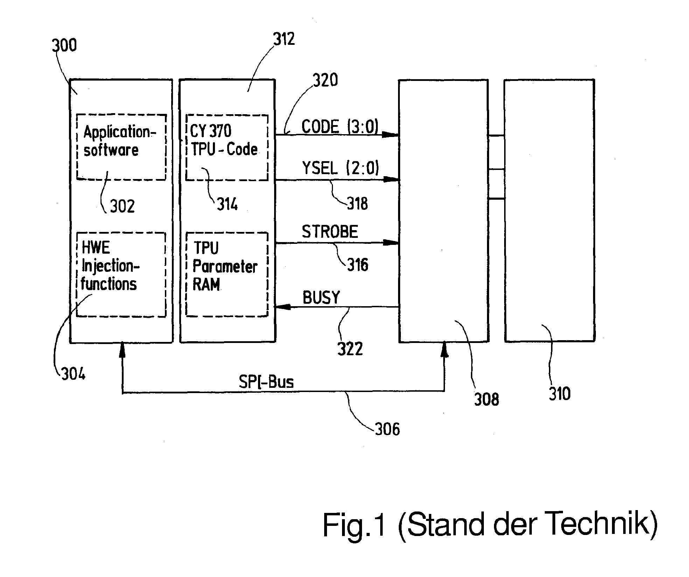

In der dortigen Fig. 1 sind mechanische Baukomponenten einer piezoelektrisch angesteuerten Kraftstoffeinspritzanlage dargestellt. Die Kraftstoffeinspritzanlage umfaßt eine Einspritznadel, die eine Einspritzung von Kraftstoff aus einer Kraftstoffdruckleitung in einen Zylinder ermöglicht. Ein piezoelektrisches Element (Aktor) ist mit einem Kolben gekoppelt, wobei das piezoelektrische Element im ausgedehnten Zustand bewirkt, daß der Kolben in einen eine Hydraulikflüssigkeit enthaltenden Hydraulikadapter hineinragt. Dadurch wird ein mit einer Hohlbohrung zusammenarbeitendes Steuerventil hydraulisch von dem Hydraulikadapter weggedrückt und aus einer ersten geschlossenen Stellung wegbewegt. Das Steuerventil befmdet sich in einer zweiten, geschlossenen Stellung, wenn das piezoelektrische Element vollständig ausgedehnt ist. Dabei wird die Einspritznadel durch den hydraulischen Druck in der Kraftstoffleitung in einer geschlossenen Stellung gehalten. Somit tritt das Kraftstoffgemisch nicht in den Zylinder ein. Umgekehrt kommt es in der Kraftstoffdruckleitung zu einem Druckabfall, wenn das piezoelektrische Element so erregt wird, daß sich das Steuerventil bzgl. der Hohlbohrung in der sogenannten Mittelstellung befindet. Dieser Druckabfall bewirkt in der Kraftstoffdruckleitung ein Druckgefälle zwischen dem oberen Ende und dem unteren Ende der Einspritznadel, so daß die Einspritznadel sich hebt und ein Einspritzen von Kraftstoff in den Zylinder ermöglicht.

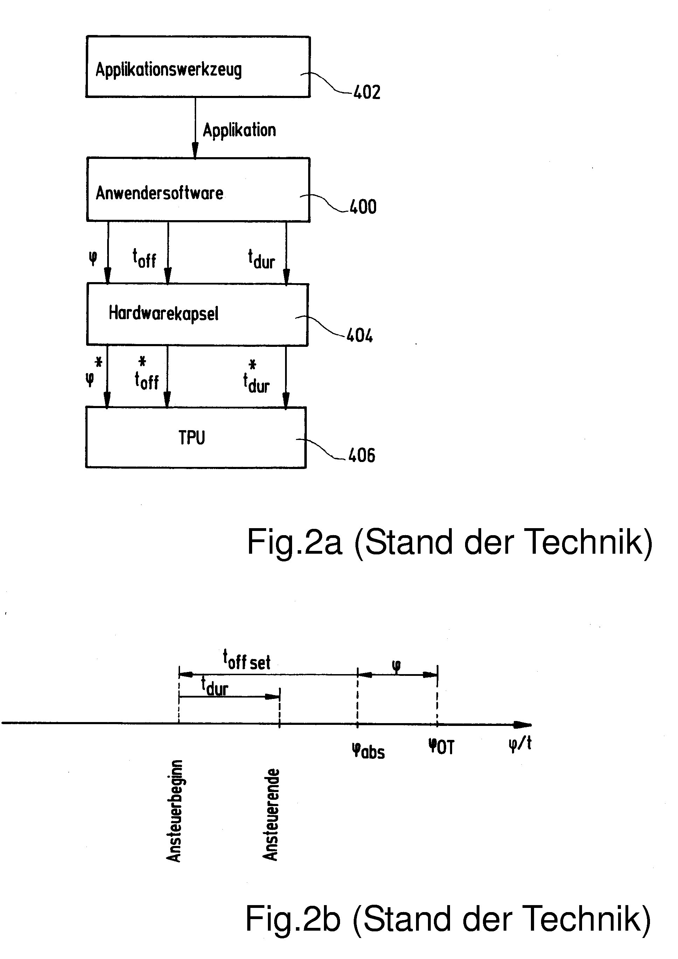

Die dortige Fig. 2 zeigt die genannten piezoelektrischen Elemente schematisch, und zwar zusammen mit einer elektrischen Schaltungsanordnung zur Steuerung der Kraftstoffeinspritzanlage. Ein erster Schaltungsbereich ,A' dient zum Laden und Entladen der piezoelektrischen Elemente. Ein zweiter Schaltungsbereich ,B' umfaßt eine Einspritzregelung ,F' mit einem Steuergerät ,D' und einem Ansteuerungs-IC ,E'. Dem Ansteuerungs-IC ,E' werden verschiedene Messwerte von elektrischen Spannungen und Strömen aus der gesamten restlichen Schaltungsanordnung zugeführt. Die piezoelektrischen Elemente sind dabei in zwei Gruppen aufgeteilt, wobei zwischen den Gruppen mittels eines Gruppenwahlschalters umgeschaltet wird. Es sind Treiber implementiert, die von dem Ansteuerungs-IC ,E' empfangene Steuersignale in Spannungen umformen, die nach Bedarf zum Schließen und Öffnen der Schalter wählbar sind. Während Ladevorgängen werden die Gruppenwahlschalter von Dioden überbrückt. Die Funktionalität der Gruppenwahlschalter reduziert sich daher auf die Auswahl einer Gruppe der piezoelektrischen Elemente lediglich für einen Entladevorgang. Durch Schließen und Öffnen eines Ladeschalters bzw. Entladeschalters in Abhängigkeit von dem Strom ist es möglich, den Ladestrom und den Entladestrom auf vorgegebene Mittelwerte einzustellen und/oder zu verhindern, daß sie vorgegebene Maximalwerte und/oder Minimalwerte überschreiten bzw. unterschreiten. Für diese Messung wird zusätzlich eine Spannungsquelle benötigt, die eine Gleichspannung von +5 V liefert sowie ein Spannungsteiler in Form zweier Widerstände. Damit wird der Ansteuerungs-IC, der die Messungen durchführt, vor negativen Spannungen geschützt. Auf die weiteren Details dieser Schaltungsanordnung kommt es jedoch vorliegend nicht an, so daß hierzu lediglich auf die genannte Druckschrift verwiesen wird.

Bei den vorbeschriebenen Einspritzanlagen besteht nun insbesondere die Möglichkeit, Voreinspritzungen mit einer Zeitkomponente zu applizieren. Dabei wird ein Kurbelwellenwinkel des Verbrennungsmotors, bezogen auf einen oberen Totpunkt (OT) der Kurbelwelle, vorgegeben sowie eine Zeitkomponente bezogen auf einen absoluten Kurbelwellenwinkel, der sich aus dem applizierten Relativ- und dem OT-Winkel ergibt. Die Applikation mit Zeitkomponenten soll sicherstellen, daß der zeitliche Abstand zwischen zwei Einspritzmengen unabhängig von der aktuellen Motordrehzahl, eingehalten wird.

Um den genannten Anforderungen zu genügen, weisen diese Kraftstoffeinspritzanlagen meist eine erste Rechnereinheit zur Abarbeitung der Applikationsvorgaben und zur Ausführung von Regelungsvorgängen sowie eine zweite Rechnereinheit zur zeitgesteuerten Ansteuerung von elektrischen Endstufen, welche letztlich die genannten Aktoren antreiben, auf.

Die genannte zeitliche Ansteuerung der Einspritzungen erfolgt insbesondere in Abhängigkeit von einem von einem Kurbelwellendrehzahlgeber bereitgestellten analogen oder digitalen Drehzahlgebersignal.

Die Zeiten, an denen Voreinspritzungen, Haupteinspritzungen und auch Nacheinspritzungen stattfinden, werden dabei vor dem zugehörigen oberen Totpunkt (OT) berechnet. So werden die Voreinspritzung(en) beispielsweise bei einem 6-Zylinder-Verbrennungsmotor bei einem Kurbelwellenwinkel (KW) 138° vor dem zugehörigen oberen Totpunkt (OT) berechnet. Die Haupteinspritzung und Nacheinspritzungen werden hingegen erst bei 78° KW vor OT berechnet. Hierdurch kommt es in Drehzahlbereichen, in denen eine hohe Dynamik vorherrscht, zu einer Inkonsistenz der Daten, die den jeweiligen Einspritzungen zugrunde liegen. Dies kann zum einen dazu führen, daß die einzuspritzenden Mengen nicht aufeinander abgestimmt sind, oder daß die Ansteuerbeginne für das Einspritzventil so dicht beieinander liegen, daß die zweite Rechnereinheit zur zeitgesteuerten Ansteuerung die Einspritzungen nicht mehr bereitstellen kann. Im schlimmsten Falle fallen hierdurch Einspritzungen aus. Ein Ausfall einer Voreinspritzung führt beispielsweise zu einer deutlichen Verschlechterung des Motorgeräusches. Dieses Phänomen tritt in der Startphase des Verbrennungsmotors besonders deutlich zutage.

Der Erfindung liegt daher die Aufgabe zugrunde, ein Verfahren zum Betrieb einer Kraftstoffeinspritzanlage der eingangs beschriebenen Art dahingehend weiterzubilden, daß die Konsistenz der zu berechnenden Daten gewährleistet ist und es infolgedessen - insbesondere während des Startprozesses - nicht zu einem Wegfall von Einspritzungen kommen kann.

### Vorteile der Erfindung

Diese Aufgabe wird gelöst durch die Merkmale des unabhängigen Anspruchs 1. Vorteilhafte Ausgestaltungen sind Gegenstand der Unteransprüche.

Grundidee der Erfindung ist es, in Abhängigkeit von der Drehzahl den Zeitpunkt einer oder mehrerer Voreinspritzung(en) im wesentlichen zeitgleich mit einer Haupteinspritzung zu berechnen und zu programmieren. Durch diese im wesentlichen zeitgleiche Berechnung der Voreinspritzung(en) mit der Haupteinspritzung liegt/liegen die Voreinspritzung immer im richtigen Zeitpunkt vor der Haupteinspritzung (konsistente Daten) und es ist sichergestellt, daß immer nur beide Einspritzungen zusammen erfolgen. Auf diese Weise wird besonders vorteilhaft in der Startphase vermieden, daß eine Haupteinspritzung ohne Voreinspritzung auftritt. Dadurch ergibt sich eine wesentliche Verbesserung des Verbrennungsgeräuschs. Insbesondere wird so ermöglicht, daß eine Voreinspritzung schon bei der ersten Einspritzberechnung angesteuert werden kann, woraus eine deutliche Verringerung der Startzeit resultiert.

Bevorzugt wird der Zeitpunkt der von dem wenigstens einen Aktor bewirkten Voreinspritzung(en) dann im wesentlichen zeitgleich mit der von dem wenigstens einen Aktor bewirkten Haupteinspritzung berechnet und programmiert, wenn die Drehzahl einen vorgebbaren Drehzahlschwellenwert unterschreitet.

Hierdurch wird insbesondere ermöglicht, daß während der Startphase die Voreinspritzung praktisch zeitgleich mit der Haupteinspritzung im Main-Interrupt berechnet wird und so gegenüber aus dem Stand der Technik bekannten Berechnungen in einem früheren Zeitpunkt (Pilot-Interrupt) weitgehend unabhängig von Schwankungen beispielsweise der Drehzahl oder anderer Betriebsparameter des Motors, die im Zeitintervall zwischen Pilot-Interrupt und Main-Interrupt auftreten können, ist.

Vorzugsweise ist vorgesehen, daß der Zeitpunkt der von dem wenigstens einen Aktor bewirkten Voreinspritzung(en) unmittelbar vor der von diesem Aktor bewirkten Haupteinspritzung berechnet und programmiert wird.

### Zeichnung

Weitere Vorteile und Merkmale sind Gegenstand der nachfolgenden Beschreibung sowie der zeichnerischen Darstellung eines Ausführungsbeispiels der Erfindung.

In der Zeichnung zeigen:
- Fig. 1: in Blockdarstellung elektrische Komponenten zur Ansteuerung einer hier betroffenen Kraftstoffeinspritzanlage;
- Fig. 2a, 2b: eine typische Architektur eines Steuerprogramms zur Ansteuerung einer Kraftstoffeinspritzanlage gemäß dem Stand der Technik (a) sowie die zugrundeliegenden zeitlichen Zusammenhänge bei der Ansteuerung in einem Zeitdiagramm (b).
- Fig. 4: ein Zeitdiagramm einer Ansteuerung einer Kraftstoffeinspritzanlage mit Voreinspritzungen und Haupteinspritzungen.

### Beschreibung von Ausführungsbeispielen

In Fig. 1 sind aus dem Stand der Technik bekannte elektrische Baukomponenten zur Ansteuerung einer eingangs beschriebenen Kraftstoffeinspritzanlage vereinfacht dargestellt. Eine erste Rechnereinheit 300 weist in an sich bekannter Weise einen Steueralgorithmus (Applicationsoftware) 302 auf. Zusätzlich sind im voraus beispielsweise empirisch berechnete Einspritzfunktionen (Injectionfunctions) 304 vorgesehen. Die erste Rechnereinheit 100 ist über einen Bus 306 mit einem Ansteuerbaustein 308 einer Endstufe (Powerstages) 310 verbunden. Über den Bus 306 werden weitere Steuersignale an den Ansteuerbaustein 308 übertragen, welche allerdings in dem vorliegenden Zusammenhang ohne Bedeutung sind.

Eine mit der ersten Rechnereinheit 300 zusammenarbeitende zweite Rechnereinheit 312 dient, ebenfalls an sich bekannt, zur hochpräzisen zeitlichen Ansteuerung der eingangs beschriebenen Piezo-Aktoren in Echtzeit, und zwar in Abhängigkeit von dem nachfolgend noch im Detail beschriebenen Ansteueralgorithmus. Die zweite Rechnereinheit 312 enthält zu diesem Zweck ein (nicht gezeigtes) Drehzahlerfassungsteil und ein (ebenfalls nicht gezeigtes) Ansteuerungsteil zur genannten zeitlichen Steuerung der Einspritzungen bzw. Einspritzphasen. Die zweite Rechnereinheit 312 weist ferner Programmmittel 314 zur Ausführung einer Extrapolation der Motordrehzahl n auf.

Die zweite Rechnereinheit 312 ist mit dem Ansteuerbaustein 308 ferner über eine oder mehrere Datenleitungen 316 - 322 verbunden, über die Steuersignale wie bspw. die gezeigten Handshake-Signale 316, 322 übertragen werden. Weitere Ausführungen zu diesen Datenleitungen 316 - 322 erübrigen sich im vorliegenden Zusammenhang.

Die Fig. 2a zeigt ein Blockdiagramm eines Steuerprogrammes zur Ansteuerung einer vorbeschriebenen Kraftstoffeinspritzanlage gemäß dem Stand der Technik. Das Steuerprogramm wird in dem vorliegenden Beispiel in Form eines Anwendungsprogrammes 400 mittels eines an sich bekannten Applikationswerkzeuges 402 erstellt. Dem Anwendungsprogramm liegen als physikalische Parameter der bezüglich eines oberen Totpunktes (OT) relative Kurbelwellenwinkel (KW-Winkel) Phi eines (nicht gezeigten) Verbrennungsmotors, ein Zeitoffset t_off für die Einspritzung, sowie eine Ansteuerdauer t_dur zugrunde. Die Parameter Phi und t_off sind in einem sogenannten statischen Interrupt und der Parameter t_dur in einem sogenannten dynamischen Interrupt programmiert. Diese physikalischen Parameter werden mittels einer hardwarenahen Software 404 in ein für die zweite Rechnereinheit taugliches Format Phi*, t_off* und t_dur* übergeführt und danach an eine zweite "Time Processing Unit TPU" (zweite Rechnereinheit 406) übermittelt. Die genannten Parameter sind entweder im voraus in Tabellen abgelegt oder nachträglich per Femübertragung (remote) in das System einspeisbar.

In der Fig. 2b sind die im Stand der Technik bei der Ansteuerung einer vorbeschriebenen Kraftstoffeinspritzanlage zugrundeliegenden zeitlichen Zusammenhänge schematisch illustriert. Als Bezugsgröße bei der Berechnung der Parameter dient in an sich bekannter Weise der genannte obere Totpunkt (OT) der Kurbelwelle. Zunächst wird der relative Beginnwinkel Phi vom OT zurückgerechnet (Phi_abs). Von Phi_abs ausgehend wird dann erst der Offsetwert t_offset zurückgerechnet, wobei sich der jeweilige Ansteuerbeginn einer Einspritzung bzw. Einspritzphase ergibt. Vom Ansteuerbeginn ausgehend wird dann mittels des Parameters t_dur das jeweilige Ansteuerende berechnet.

Es ist hervorzuheben, daß beim erfindungsgemäßen Steuerprogramm die Zeitkomponenten t_off und t_dur anhand der aktuellen Motordrehzahl n in einen korrespondierenden KW-Winkel Phi umgerechnet und der ersten Rechnereinheit zur Ansteuerung übergeben werden. Dies hat den Vorteil, dass die genannten Schwankungen der Drehzahl n, die letztlich das mögliche Ineinanderlaufen der Einspritzungen verursachen, bei der nachfolgend beschriebenen Programmierung der Beginnflanken der Ansteuersignale für die Aktoren automatisch Berücksichtigung finden.

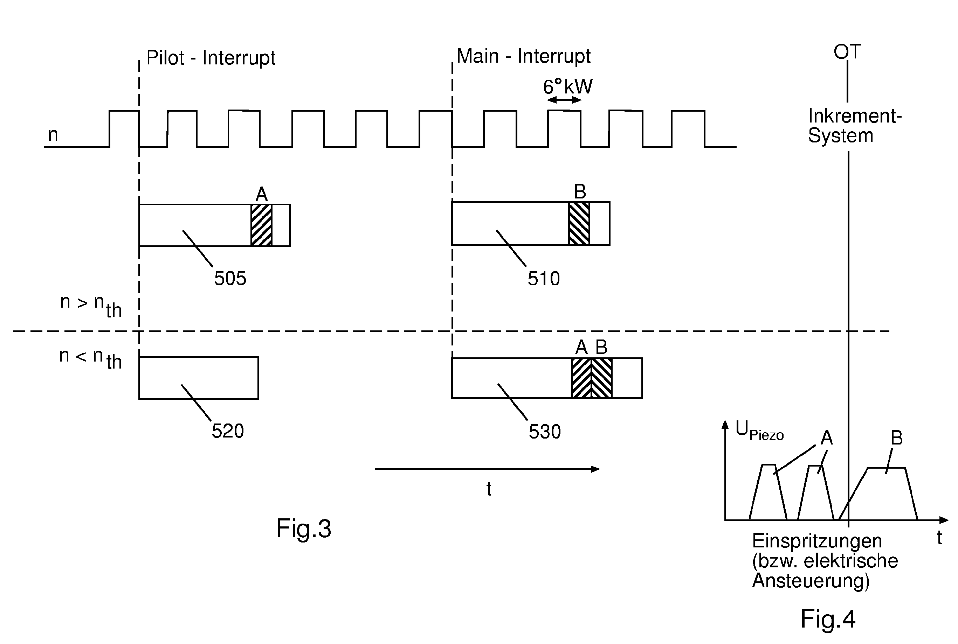

Der zeitliche Verlauf der Ansteuerung der Kraftstoffeinspritzanlage erfolgt mittels der bereits vorerwähnten statischen und dynamischen Interrupts. Dies ist in Fig. 3, Fig. 4 anhand eines in einem Zeitdiagramm dargestellten, eine Haupteinspritzung B und eine oder mehrere Voreinspritzungen A umfassenden Kraftstoffeinspritzzyklus illustriert. Es ist anzumerken, daß entsprechend der vorliegend gewählten Notation die Voreinspritzung(en) A zeitlich vor der Haupteinspritzung B zu liegen kommt/kommen.

Im oberen Teil der Fig. 3 ist das digitalisierte, rechteckförmige Kurbelwellendrehzahlsignal n schematisch dargestellt. Die Breite eines Rechtecks des Kurbelwellendrehzahlsignals entspricht 6° KW, d.h. einem Kurbelwellenwinkel von 6°.

Bei einem vorgegebenen Kurbelwellenwinkel (KW) vor dem oberen Totpunkt OT, bei einem 6-Zylinder-Verbrennungsmotor beispielsweise 138° KW vor dem oberen Totpunkt, erfolgt ein sogenanntes Pilot-Interrupt, in dem auf obenbeschriebene Weise die Voreinspritzung(en) berechnet werden.

Bei einem weiteren Kurbelwellenwinkel vor dem oberen Totpunkt OT erfolgt ein sogenanntes Main-Interrupt, in dem auf an sich bekannte Weise die Haupteinspritzung B berechnet wird.

Bei einem 6-Zylinder-System werden die Voreinspritzungen - wie erwähnt - beginnend bei einem Winkel von 138° KW vor dem oberen Totpunkt OT berechnet oder programmiert. Die Berechnung/Programmierung findet in einem Bereich statt, der schematisch durch ein Rechteck 505 dargestellt ist. In diesem Bereich finden darüber hinaus weitere Berechnungen für andere Funktionen statt, beispielsweise eine Drehzahlerfassung/regelung und dgl.. In dem mit A bezeichneten schraffierten Bereich wird dabei die Voreinspritzung programmiert. Unter "programmiert" wird vorliegend das Übergeben der Parameter Ansteuerbeginn und Ansteuerdauer auf die oben beschriebene Weise von der ersten Rechnereinheit 300, auch CPU genannt, an die zweite Rechnereinheit 312, auch TPU genannt, verstanden, wobei die zweite Rechnereinheit 312 ihrerseits die Ansteuerung selbsttätig einleitet und beendet. Sie wird dabei nur vom Inkrementsystem auf Kurbelwelle getriggert, wodurch eine eindeutige Positionsbestimmung möglich ist. Die Berechnung der Haupteinspritzung beginnt in dem Main-Interrupt 78° KW vor OT.

Im mittleren Teil der Fig. 3 ist schematisch die an sich bekannte und im Stand der Technik für den gesamten Drehzahlbereich verwendete Programmierung bei einer Drehzahl n dargestellt. Bei der vorliegenden Erfindung wird diese Art der Programmierung nur bei Drehzahlen n verwendet, die größer als ein vorgebbarer Schwellenwert nₜₕ sind. In diesem Drehzahlbereich erfolgt die Berechnung/Programmierung auch der Voreinspritzung(en) A im mit 505 bezeichneten Bereich, beginnend bei 138° KW vor OT. Die Haupteinspritzung wird im mit 510 bezeichneten Bereich 78° KW vor OT berechnet/programmiert.

Im unteren Teil der Fig. 3 ist die Programmierung der Voreinspritzungen und der Haupteinspritzung bei einer Drehzahl n dargestellt, die kleiner ist als die vorgebbare Drehzahlschwelle nₜₕ. In diesem Drehzahlbereich wird/werden die Voreinspritzung(en) A nicht mehr in dem im Pilot-Interrupt beginnenden Bereich 505 berechnet/programmiert, so daß dieser Berechnungsbereich um den für die Berechnung/Programmierung der Voreinspritzung(en) A erforderlichen verkürzt wird, wie es schematisch durch das mit 520 bezeichnete Rechteck dargestellt ist. Die Berechnung der Voreinspritzung(en) A wird vielmehr dem Bereich des Main-Interrupts 510 zugeschlagen, in dem die Haupteinspritzung B programmiert wird. Hierdurch vergrößert sich die Rechenzeit, in dem die Haupteinspritzung programmiert wird, um die Rechenzeit, in der die Voreinspritzung(en) A berechnet/programmiert wird/werden, wie es schematisch im unteren Teil der Fig. 3 anhand des Rechtecks 530 dargestellt ist. Die Voreinspritzungen erfolgen unmittelbar vor der Haupteinspritzung. Dies ist schematisch in Fig. 4 anhand der Piezospannung über der Zeit dargestellt, in dem zwei Voreinspritzungen A und eine Haupteinspritzung B dargestellt sind.

In der Startphase des Verbrennungsmotors wird nun zunächst eine Positionsbestimmung durchgeführt, erst danach wird die Berechnung oder Programmierung der Einspritzungen vorgenommen. Dadurch, daß die Voreinspritzung(en) A unmittelbar vor der Haupteinspritzung B programmiert wird/werden, wird ein Startverzug verhindert, der bei einer Programmierung der Voreinspritzung(en) gemäß Stand der Technik dadurch entsteht, daß die Voreinspritzung(en) während des Pilot-Interrupts erfolgt/erfolgen. Wenn nämlich in diesem Falle die erste gültige Position zwischen 138° KW und 78° KW vor OT gefunden wird, so ist die erste Einspritzung, die in diesem Falle berechnet/programmiert werden könnte, eine Haupteinspritzung. Da eine Haupteinspritzung ohne Voreinspritzung im allgemeinen wegen des damit verbundenen negativen Verbrennungsgeräusches nicht freigegeben wird, könnte in diesem Falle erst für den nächsten Zylinder die Einspritzung erfolgen, d.h. 120° KW später. Dieser Startverzug wird durch vorliegende Erfindung vermieden, da während des Startvorgangs, bei dem gewöhnlich niedrige Drehzahlen herrschen, die Voreinspritzung(en) A unmittelbar vor der Haupteinspritzung B programmiert wird/werden.

Außerdem werden störende Effekte, die durch die große Drehzahldynamik während der Startphase verursacht werden, vermieden, während die Datenkonsistenz für Vor- und Haupteinspritzungen verbessert wird.

## Patentansprüche

1. Verfahren zum Betrieb einer Kraftstoffeinspritzanlage für einen wenigstens einen Zylinder aufweisenden Verbrennungsmotor, wobei jedem Zylinder wenigstens ein Aktor zur Einspritzung von Kraftstoff in den Zylinder durch Laden oder Entladen des Aktors zugeordnet ist, und wobei die Einspritzung von Kraftstoff in wenigstens zwei zeitlich aufeinanderfolgenden, programmierten Einspritzphasen erfolgt, **dadurch gekennzeichnet, daß** der Zeitpunkt wenigstens einer von dem wenigstens einen Aktor bewirkten Voreinspritzung (A) drehzahlabhängig im wesentlichen zeitgleich mit einer von dem wenigstens einen Aktor bewirkten Haupteinspritzung (B) programmiert wird.

2. Verfahren nach Anspruch 1, **dadurch gekennzeichnet, daß** der Zeitpunkt der wenigstens einen von dem wenigstens einen Aktor bewirkten Voreinspritzung im wesentlichen dann zeitgleich mit der von dem wenigstens einen Aktor bewirkten Haupteinspritzung programmiert wird, wenn die Drehzahl (n) einen vorgebbaren Drehzahlschwellenwert (nₜₙ) unterschreitet.

3. Verfahren nach Anspruch 1 oder 2, **dadurch gekennzeichnet, daß** der Zeitpunkt der wenigstens einen von dem wenigstens einen Aktor bewirkten Voreinspritzung (A) unmittelbar vor der von dem wenigstens einen Aktor bewirkten Haupteinspritzung (B) programmiert wird.
